# DEMANDE DE BREVET EUROPEEN

(11) **EP 0 914 769 A1**
(43) Date de publication de la demande: **12.05.1999**
(21) Numéro de dépôt: 98402445.5
(22) Date de dépôt: 05.10.1998
(51) Int. Cl.: A21C 3/02, A21C 3/06

(54) **Façonneuse de pâtons**

(30) Priorité: 07.11.1997 FR 9714056
(71) Demandeur: Electrolux Baking, 06800 Cagnes-sur-Mer (FR)
(72) Inventeur: Bonnet, Daniel, 58700 Premery (FR); Garcia, François, 58130 Urzy (FR); Bernhard, Frédéric, 58000 Nevers (FR)
(74) Mandataire: Moncheny, Michel

(57) **Abrégé**

Cette façonneuse de pâtons comprend, portés par un châssis (12), un poste (20) de laminage de pâtons, un poste de roulage de pâtons laminés, un poste de façonnage de pâtons roulés par allongement de ces derniers et au moins un convoyeur (14,16) de transfert des pâtons du poste (20) de laminage vers les postes de roulage (24) et de façonnage. Chaque convoyeur (14,16) constitue un ensemble monobloc structurellement distinct du châssis (12) et est monté sur ce dernier par des moyens amovibles (130,132) de fixation.

## Description

La présente invention est relative à une façonneuse de pâtons.

Plus particulièrement, l'invention se rapporte à une façonneuse de pâtons du type comprenant, portés par un châssis, un poste de laminage de pâtons, un poste de roulage de pâtons laminés, un poste de façonnage de pâtons roulés par allongement de ces derniers et au moins un convoyeur de transfert des pâtons du poste de laminage vers les postes de roulage et de façonnage.

Dans l'état de la technique, les convoyeurs sont constitués chacun par un tapis roulant entraîné par des cylindres motorisés montés à rotation sur le châssis.

Dans les façonneuses de ce type, l'opération de démontage du ou des convoyeurs est relativement longue à mettre en oeuvre dans la mesure où elle nécessite un démontage d'une partie du châssis.

Le but de l'invention est de palier cet inconvénient.

Elle a donc pour objet une façonneuse de pâtons comprenant, portés par un châssis, un poste de laminage de pâtons, un poste de roulage de pâtons laminés, un poste de façonnage de pâtons roulés par allongement de ces derniers et au moins un convoyeur de transfert des pâtons du poste de laminage vers les postes de roulage et de façonnage, constitué d'un ensemble monobloc structurellement distinct du châssis, et monté sur ce dernier par des moyens amovibles de fixation, chaque convoyeur comportant au moins un bâti équipé de cylindres d'entraînement supportant un tapis de transfert de pâtons, caractérisée en ce que le bâti est muni de moyens de réglage grossier et de moyens de réglage fin de la tension du tapis par réglage de l'écartement entre les cylindres d'entraînement.

Ainsi, la suppression des moyens de fixation provoque la libération du ou de chaque convoyeur, qui peut dès lors être déposé.

La façonneuse de pâtons selon l'invention peut en outre comporter une ou plusieurs des caractéristiques suivantes :
- le châssis comporte deux flasques latéraux supportant le ou chaque convoyeur, les moyens de fixation comportant un ensemble de broches s'insérant chacune dans un passage ménagé dans l'un des flasques et dans un logement coaxial ménagé dans le convoyeur ;
- les logements pour la fixation du convoyeur sur les flasques latéraux sont ménagés dans le bâti ;
- les moyens de réglage grossier de la tension du tapis comportent une pièce mobile axialement déplaçable par rapport au bâti du convoyeur sous la commande d'un mécanisme à came et dans laquelle est monté à rotation un des cylindres d'entraînement;
- le mécanisme à came comporte un disque excentré contre lequel la pièce mobile est sollicitée sous l'action d'un effort élastique exercé par le tapis, le disque excentré étant monté à rotation sur un support entre une première position angulaire de mise sous tension du tapis et une deuxième position angulaire de relâchement de la tension du tapis;
- les moyens de réglage fin de la tension du tapis comportent une vis de réglage de la position axiale du support par rapport au bâti du convoyeur, sur laquelle le support est monté;
- la pièce mobile comporte une plaque comprenant une première zone d'extrémité équipée d'un palier dans lequel est monté à rotation le cylindre d'entraînement et une zone d'extrémité opposée formant butée en appui sur le disque excentré et montée à coulissement sur le support du disque ;
- la zone d'extrémité de la plaque est constituée par une extrémité coudée de ladite plaque ou par une pièce rapportée fixée sur la plaque ;
- la façonneuse comporte une tôle latérale montée sur le bâti du convoyeur et espacée de celui-ci pour délimiter un espace dans lequel coulisse la pièce mobile au cours de son déplacement axial ;
- la façonneuse comporte un premier convoyeur à tapis de transfert comportant des première et deuxième faces actives mutuellement opposées et mobiles en sens inverse, et un deuxième convoyeur à tapis de transfert comportant une face active sensiblement parallèle à la deuxième face active du premier convoyeur et mobile à une vitesse inférieure et en sens inverse par rapport à cette dernière, la première face active du premier convoyeur délimitant un trajet aller de convoyage de pâtons laminés de l'entrée du premier convoyeur jusqu'à un point intermédiaire à travers le poste de roulage des pâtons, et la deuxième face active du premier convoyeur et la face active du deuxième convoyeur assurant conjointement le façonnage des pâtons roulés et leur convoyage selon un trajet retour du point intermédiaire jusqu'à la sortie du deuxième convoyeur située à proximité de l'entrée du premier convoyeur ;
- la façonneuse comporte en outre un troisième convoyeur à tapis de transfert disposé en aval du trajet aller au voisinage du point intermédiaire et s'étendant en direction d'un intervalle situé entre les premier et deuxième convoyeurs pour assurer un transfert actif des pâtons roulés du trajet aller vers le trajet retour ;
- chaque flasque comporte une plaque latérale dans laquelle sont ménagés les passages recevant les broches de fixation, la plaque étant montée mobile sur le reste du flasque sous l'action de moyens de commande de l'écartement des premier et deuxième convoyeurs.

D'autres caractéristiques et avantages ressortiront de la description suivante, donnée uniquement à titre d'exemple et faite en référence aux dessins annexés sur lesquels :
- la figure 1 représente une vue en perspective d'une façonneuse selon l'invention;
- la figure 2 représente une vue schématique de profil de la façonneuse de la figure 1 après enlèvement de carters de protection;
- la figure 3 est une vue de côté d'un convoyeur de la façonneuse de la figure 1; et
- la figure 4 est une vue de dessus en coupe longitudinale suivant la ligne 4-4 de la figure 3.

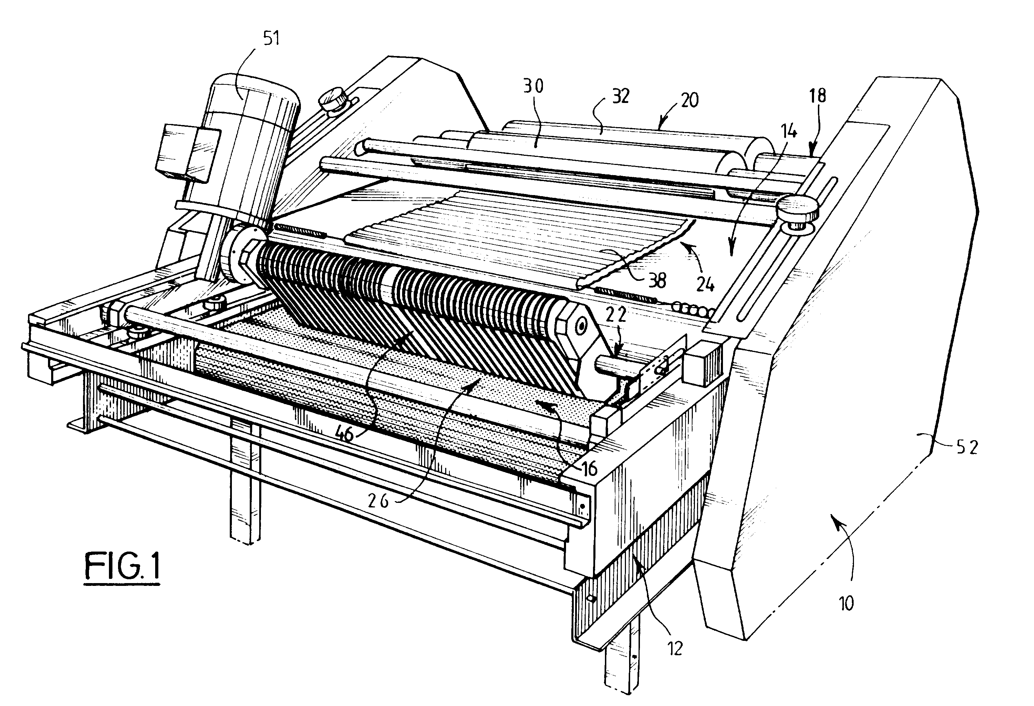

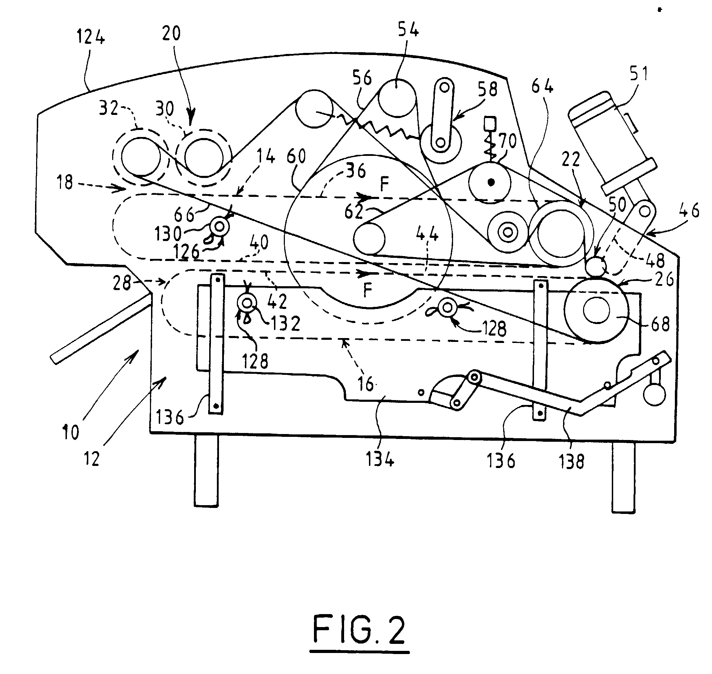

En référence aux figures 1 et 2, la façonneuse de pâtons suivant l'invention, désignée par la référence numérique générale 10, comporte un châssis 12 réalisé par exemple à partir de poutres et de profilés métalliques, et sur lequel sont montés, l'un au dessus de l'autre, deux convoyeurs motorisés de transfert de pâtons, à savoir un premier convoyeur supérieur 14 et un deuxième convoyeur inférieur 16.

Les deux convoyeurs 14 et 16 constituent conjointement une station de transfert de pâtons selon un trajet aller, de l'entrée de celle-ci constituée par une première extrémité 18 du convoyeur supérieur 14 jusqu'à un point intermédiaire, constitué par l'extrémité opposée 22 de ce convoyeur supérieur 14 à travers un poste 24 de roulage de pâtons puis, après avoir été transférés sur une première extrémité 26 du convoyeur inférieur 16, selon un trajet retour du point intermédiaire jusqu'à la sortie de la station de convoyage constituée par l'extrémité opposée 28 du convoyeur inférieur 16 située à proximité de l'entrée de la station de convoyage.

La station de laminage 20 est constituée par l'association de deux cylindres lamineurs moteurs, respectivement 30 et 32, situés en regard d'une trémie d'entrée 34 (non représentée) permettant l'alimentation de la façonneuse en pâtons.

Le tapis des convoyeurs supérieur 14 et inférieur 16 circule dans le même sens représenté par une flèche F sur la figure 2, le tapis du convoyeur supérieur 14 étant animé d'un mouvement selon une vitesse supérieure à celle du tapis du convoyeur inférieur 16.

Le premier convoyeur 14 comporte une face active supérieure 36 délimitant le trajet aller et coopérant avec un tapis 38 fixe avec lequel elle forme le poste 24 de roulage de pâtons. Ce tapis 38 est par exemple constitué par une plaque souple réalisée en un matériau approprié pour l'utilisation envisagée, par exemple en un fil d'inox alimentaire. Il assure, conjointement avec la face supérieure active 36, le roulage des pâtons laminés délivrés en sortie du poste de laminage 20, comme cela est classique.

Par ailleurs, le convoyeur supérieur 14 comporte une face active inférieure, désignée par la référence numérique 40, s'étendant parallèlement à la face active supérieure 36 et mobile en sens inverse par rapport à cette dernière.

Elle coopère avec la face active supérieure 42 du convoyeur inférieur 16 pour délimiter le trajet retour et constituer un poste 44 de façonnage des pâtons roulés par allongement de ces derniers.

En effet, la face active supérieure 42 du convoyeur inférieur 16 s'étend sensiblement parallèlement à la face inférieure active 40 du convoyeur supérieur 14 et est mobile en sens inverse par rapport à cette dernière.

En outre, ces deux faces actives 40 et 42 sont légèrement convergentes et sont distantes l'une de l'autre, au niveau du point intermédiaire 22 d'une distance correspondant sensiblement au diamètre des pâtons roulés délivrés en sortie de la station de roulage 24 et, au niveau de la sortie 28 de la station de convoyage, d'une distance correspondant au diamètre des pâtons à obtenir.

La façonneuse comporte en outre un troisième convoyeur motorisé, désigné par la référence numérique 46, disposé en aval du trajet aller au voisinage du point intermédiaire 22.

Il comporte une surface active 48 tournée vers le convoyeur supérieur 14 et s'étendant en direction d'un intervalle 50 situé entre les convoyeurs supérieur 14 et inférieur 16.

Le troisième convoyeur 46 est motorisé sous l'action de moyens moteurs 51 à une vitesse inférieure à celle du convoyeur supérieur 14, et supérieure ou égale à celle du convoyeur inférieur 16, de telle sorte que les surfaces en regard des premier et troisième convoyeurs soient animées de mouvements antagonistes, pour l'entraînement en rotation des pâtons roulés et le transfert de ces derniers jusqu'à l'intervalle 50.

Avantageusement, le troisième convoyeur 46 est monté axialement déplaçable sur le châssis 12 entre une position rétractée, dans laquelle il s'écarte du convoyeur supérieur 14, et une position avancée de poussée des pâtons entre le convoyeur supérieur et le convoyeur inférieur, autour d'une position d'équilibre stable, représentée sur la figure 2.

Comme on le voit sur la figure 2 sur laquelle les carters latéraux de protection 52 de la façonneuse de la figure 1 ont été ôtés, la façonneuse est complétée par des moyens moteurs assurant l'entraînement des convoyeurs supérieur 14 et inférieur 16 selon la cinématique décrite précédemment, ainsi que l'entraînement en rotation des cylindres de laminage 30 et 32.

En particulier, ces moyens d'entraînement comportent un pignon moteur principal 54 entraînant, au moyen d'une courroie 56 associée à un tendeur 58, un motoréducteur 60, lequel motoréducteur 60 entraîne en rotation, par l'intermédiaire d'une deuxième courroie 62 un pignon d'entraînement 64 également associé à un motoréducteur.

Le pignon 64 provoque d'une part l'entraînement d'un cylindre d'entraînement du tapis supérieur 14, non représenté sur cette figure, et d'autre part, par l'intermédiaire du motoréducteur et au moyen d'une courroie d'entraînement 66, un pignon 68 coopérant avec un cylindre d'entraînement du convoyeur inférieur 16, non représenté sur cette figure, et les cylindres de laminage 30 et 32.

Comme cela est classique les courroies 62 et 66 sont également associées à des tendeurs, tels que 70.

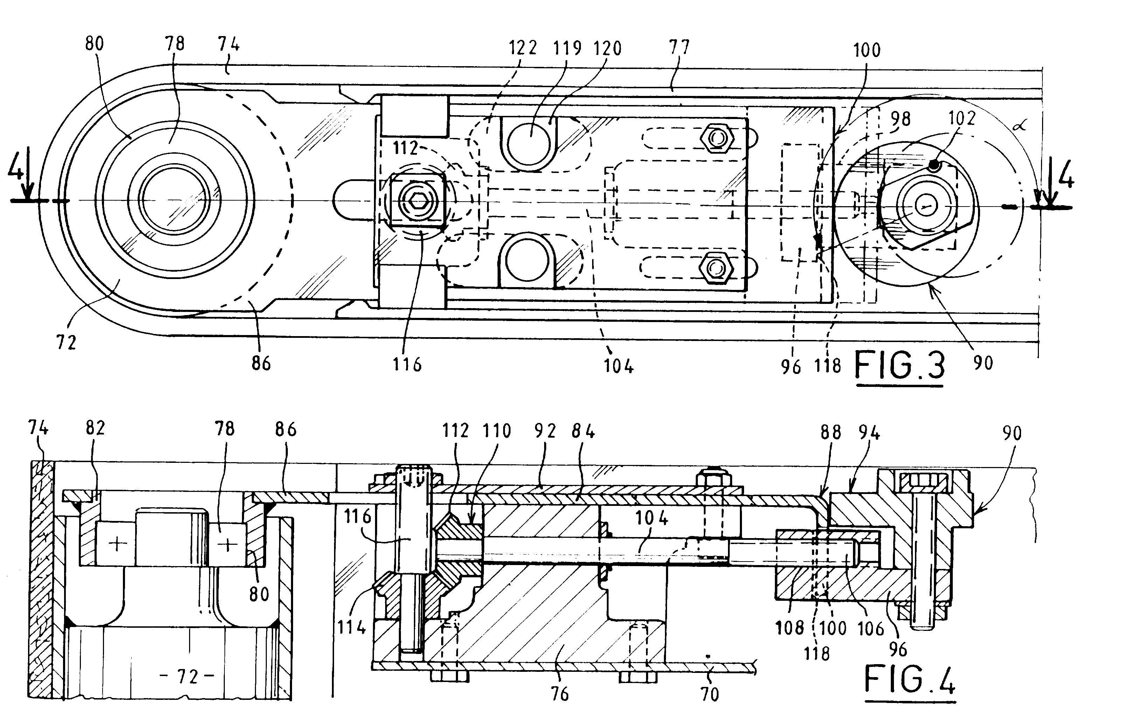

Une description détaillée des convoyeurs supérieur 14 et inférieur 16 va maintenant être faite en référence aux figures 3 et 4, qui montrent la structure d'une partie de l'un des convoyeurs.

Le convoyeur représenté sur ces figures constitue un tapis roulant formant un ensemble monobloc unitaire structurellement distinct du châssis 12 qui les porte.

Il comporte : une carcasse métallique 70 ; deux cylindres d'entraînement, tels que 72, dont l'un est moteur sous l'action de l'un des pignons d'entraînement 64 et 68 et supportant un tapis de transfert de pâtons 74 ; et un bâti 76 solidaire de la carcasse 70 et portant l'un des cylindres.

Deux plaques longitudinales, telles que 77, sont montées sur la carcasse 70 pour constituer une surface de guidage sur laquelle glisse le tapis 74.

Le bâti 76 est muni de moyens de réglage de la tension du tapis 74 par déplacement axial du cylindre d'entraînement 72 par rapport à la carcasse 70.

L'autre cylindre d'entraînement est identique au cylindre 72 représenté sur cette figure. On notera toutefois qu'il est monté de façon fixe, également à l'aide d'une pièce rapportée fixée sur la carcasse 70.

Il est donc axialement immobile par rapport à cette dernière, en considérant l'axe longitudinal du convoyeur.

On voit en particulier sur la figure 4 que le cylindre d'entraînement 72 est muni d'un roulement 78 monté dans un palier 80 ménagé dans une pièce porteuse 82 axialement déplaçable par rapport à la carcasse 70 et au bâti 76 sous l'action des moyens de réglage de la tension du tapis 74.

Ces moyens de réglage comportent des moyens de réglage grossier et des moyens de réglage fin de la tension du tapis par réglage de l'écartement des cylindres d'entraînement et en particulier de la position axiale du cylindre d'entraînement 72 porté par la pièce porteuse 82.

Comme on le voit sur la figure 4, les moyens de réglage de la tension du tapis 74 comportent une pièce mobile axialement déplaçable par rapport au bâti 76 du convoyeur, constituée par une plaque 84 comportant une première zone d'extrémité 86 solidaire de la pièce porteuse 82 et une zone d'extrémité opposée 88 formant butée coopérant avec un mécanisme à came 90.

Comme on le voit sur cette figure, la zone d'extrémité 88 formant butée est constituée par une zone d'extrémité coudée de la plaque 84 munie de branches latérales.

La partie médiane de la plaque 84 coulisse par rapport au bâti 76 dans un espace délimité par ce dernier et par une tôle latérale 92 fixée sur le bâti 76.

Le mécanisme à came 90 comporte un disque excentré 94 contre lequel bute l'extrémité coudée 88 de la plaque 84 sous l'action d'un effort élastique exercée par le tapis 74. Le disque excentré est monté à rotation sur un support 96 muni de surfaces latérales planes telles que 98 (figure 3) assurant le guidage des branches latérales, telles que 100, prolongeant l'extrémité coudée 88 de la plaque 84, au cours du coulissement de cette dernière.

Comme on le voit sur la figure 3, le disque excentré 94 est monté à rotation sur le support 96 entre deux positions extrêmes, à savoir une première position angulaire de mise sous tension du tapis 74, représentée en trait plein, dans laquelle le disque 94 est en appui contre une butée de limitation de son déplacement angulaire s'opposant à l'effort exercé par le tapis 74 et une deuxième position angulaire de relâchement de la tension du tapis, représentée en trait mixte sur cette figure 3.

Comme on le voit sur cette figure, le déplacement angulaire du disque excentré 94 entre ces positions s'effectue selon un angle ∝ supérieur à 180°. On conçoit donc que la position angulaire de mise sous tension du tapis constitue une position angulaire stable dans laquelle le disque 94 étant en appui contre la butée 102.

Sous l'action de l'effort élastique exercé par le tapis 74 sur la plaque mobile 84, par l'intermédiaire du cylindre d'entraînement 72, cette dernière est en permanence en appui contre le disque excentré 94.

Dès lors, une rotation de ce dernier, de la première position angulaire vers la deuxième position angulaire, provoque une détente brusque de la tension du tapis.

A l'inverse, une rotation du disque excentré 94 de la deuxième position angulaire vers la première position angulaire provoque une mise sous tension brusque du tapis 74.

On voit par ailleurs sur les figures 3 et 4 que le convoyeur est en outre muni d'une tige filetée 104 de réglage fin de la tension du tapis.

Cette tige filetée 104 comporte une extrémité postérieure s'engageant dans un filetage 108 ménagé dans le support 96 et une extrémité opposée 110 équipée d'un pignon 112 coopérant avec un pignon complémentaire 114 solidaire d'une tige 116 de réglage de la position angulaire de la tige filetée 104, sous la commande d'un outil approprié.

Le support 96 est muni d'épaulements latéraux 118 sur lesquels viennent en appui les branches latérales 100 de la pièce mobile 84.

Dès lors, le déplacement axial du support 96 provoque un déplacement correspondant de la pièce mobile 84.

Il est ainsi possible de faire varier de façon fine la position angulaire de la tige filetée 104 et donc la position axiale du support 96.

On conçoit donc que la rotation de la tige de commande 116 permet un réglage fin de la tension du tapis 74.

Par ailleurs, le bâti 76 est muni de logements ou passages, tels que 119 et la tôle latérale 92 et la plaque mobile 84 sont munies d'orifices complémentaires, respectivement 120 et 122, rendant les passages 119 accessibles de l'extérieur du convoyeur.

En se référant à nouveau à la figure 2, le châssis 12 de la façonneuse comporte deux flasques latéraux 124, un seul étant visible sur cette figure. Chaque flasque est muni d'orifices, tels que 126 et 128, ménagés par paires dans la paroi constitutive de chaque flasque 124.

Les passages 119 ménagés dans le bâti 76 sont destinés, lors du montage du convoyeur, à être disposés de façon coaxiale aux orifices 126 et 128 des flasques 124.

Des broches, telles que 130 et 132, dont seulement quelques unes ont été représentées sur cette figure 2 par souci de clarté, s'insèrent dans les orifices 126 et 128 et dans les logements 119 afin de fixer les convoyeurs supérieur 14 et inférieur 16.

La fixation de chaque convoyeur s'effectue en insérant une broche dans un des passages 119, l'autre passage n'étant pas utilisé. Cet agencement rend le montage plus aisé à réaliser dans la mesure où chaque convoyeur peut être monté de façon réversible sur les flaques 124 en utilisant l'un quelconque des passages.

On voit en outre sur cette figure 2 que les passages 128 destinés à recevoir les broches 132 de fixation du convoyeur inférieur 16 sont ménagés dans une plaque latérale 134 montée mobile dans des guides 136 par rapport au reste du flasque 124 sous la commande d'un bras de levier 138.

On règle ainsi l'écartement entre les convoyeurs supérieur 14 et inférieur 16.

On conçoit que les convoyeurs 14 et 16 constituent des structures monoblocs distinctes du châssis 12 qui les porte et sont fixés sur ce dernier à l'aide de broches amovibles.

Le démontage de ces convoyeurs s'effectue ainsi de façon très simple.

Ce démontage consiste simplement à ôter les broches 130 et 132. Après avoir déposé les convoyeurs, le remplacement des tapis 74 de transfert de pâtons s'effectue également de façon très simple en les détendant de façon brusque. Ils peuvent être ainsi aisément dégagés des cylindres d'entraînement.

De même, le remontage du tapis est une opération simple et rapide.

Cette opération consiste simplement à insérer les tapis autour des cylindres d'entraînement, à tendre de façon brusque le tapis des convoyeurs en agissant sur les moyens de réglage grossier et à monter les convoyeurs sur les flasques latéraux 124 en utilisant les broches amovibles 130 et 132.

Si on le souhaite, avant le remontage des convoyeurs, un réglage fin de la tension du tapis peut être effectué en agissant sur la tige de réglage 116.

Dans l'exemple de réalisation décrit précédemment, la deuxième zone d'extrémité 88 de la plaque 84, formant butée, est constituée par une extrémité coudée de cette dernière et munie de branches latérales coopérant avec le support 96.

Il sera toutefois possible, en variante, de doter la plaque 84 d'une pièce rapportée formant butée fixée sur cette dernière et munie d'une surface active décalée par rapport à l'axe général de la plaque et coopérant avec le support.

Par exemple, cette pièce rapportée comporte une surface active annulaire et le support comporte une zone médiane tubulaire et les épaulements latéraux du support sont remplacés par un épaulement circulaire sur lequel vient en appui la surface annulaire de la pièce rapportée, au cours de la mise sous tension du tapis.

## Revendications

1. Façonneuse de pâtons comprenant, portés par un châssis (12), un poste (20) de laminage de pâtons, un poste (24) de roulage de pâtons laminés, un poste (44) de façonnage de pâtons roulés par allongement de ces derniers et au moins un convoyeur (14,16) de transfert des pâtons du poste (20) de laminage vers les postes de roulage (24) et de façonnage (44), constitué d'un ensemble monobloc structurellement distinct du châssis (12), et monté sur ce dernier par des moyens amovibles (130,132) de fixation, chaque convoyeur (14,16) comportant au moins un bâti (76) équipé de cylindres d'entraînement (72) supportant un tapis (74) de transfert de pâtons, caractérisée en ce que le bâti (76) est muni de moyens de réglage grossier (84,90) et de moyens de réglage fin (96,104,116) de la tension du tapis par réglage de l'écartement entre les cylindres d'entraînement (72).

2. Façonneuse selon la revendication 1, caractérisée en que le châssis (12) comporte deux flasques (124) latéraux supportant le ou chaque convoyeur (14,16), les moyens de fixation comportant un ensemble de broches (130,132) s'insérant chacune dans un passage ménagé (126,128) dans l'un des flasques et dans un logement (119) coaxial ménagé dans le convoyeur (14,16).

3. Façonneuse selon la revendication 2, caractérisée en ce que les logements (119) pour la fixation du convoyeur (14,16) sur les flasques latéraux sont ménagés dans le bâti (76).

4. Façonneuse selon l'une quelconque des revendications 1 à 3, caractérisée en ce que les moyens de réglage grossier de la tension du tapis comportent une pièce mobile (84) axialement déplaçable par rapport au bâti (76) du convoyeur sous la commande d'un mécanisme à came (90) et dans laquelle est monté à rotation un des cylindres d'entraînement (72).

5. Façonneuse selon la revendication 4, caractérisée en ce que le mécanisme à came (90) comporte un disque excentré (94) contre lequel la pièce mobile (84) est sollicitée sous l'action d'un effort élastique exercé par le tapis (74), le disque excentré (94) étant monté à rotation sur un support (96) entre une première position angulaire de mise sous tension du tapis (74) et une deuxième position angulaire de relâchement de la tension du tapis (74).

6. Façonneuse selon la revendication 5, caractérisée en ce que les moyens de réglage fin de la tension du tapis comportent une vis (104) de réglage de la position axiale du support (96) par rapport au bâti (76) du convoyeur, sur laquelle le support (96) est monté.

7. Façonneuse selon l'une des revendications 5 et 6, caractérisée en ce que la pièce mobile comporte une plaque (84) comprenant une première zone d'extrémité (86) équipée d'un palier (80) dans lequel est monté à rotation le cylindre d'entraînement (72) et une zone d'extrémité opposée (88) formant butée en appui sur le disque excentré (94) et montée à coulissement sur le support (96) du disque.

8. Façonneuse selon la revendication 7, caractérisée en ce que la zone d'extrémité (88) de la plaque est constituée par une extrémité coudée de ladite plaque (84).

9. Façonneuse selon la revendication 7, caractérisée en ce que la zone d'extrémité (88) de la plaque est constituée par une pièce rapportée fixée sur la plaque (84).

10. Façonneuse selon l'une quelconque des revendications 1 à 9, caractérisée en ce qu'elle comporte une tôle latérale (92) montée sur le bâti (76) du convoyeur et espacée de celui-ci pour délimiter un espace dans lequel coulisse la pièce mobile (84) au cours de son déplacement axial.

11. Façonneuse selon l'une quelconque des revendications 1 à 10, caractérisée en ce qu'elle comporte un premier convoyeur (14) à tapis de transfert comportant des première (36) et deuxième (40) faces actives mutuellement opposées et mobiles en sens inverse, et un deuxième convoyeur (16) à tapis de transfert comportant une face active (42) sensiblement parallèle à la deuxième face active (40) du premier convoyeur (14) et mobile à une vitesse inférieure et en sens inverse par rapport à cette dernière, la première face active (36) du premier convoyeur délimitant un trajet aller de convoyage de pâtons laminés de l'entrée du premier convoyeur (14) jusqu'à un point intermédiaire (22) à travers le poste (38) de roulage des pâtons, et la deuxième face active (40) du premier convoyeur et la face active (40) du deuxième convoyeur assurant conjointement le façonnage des pâtons roulés et leur convoyage selon un trajet retour du point intermédiaire (22) jusqu'à la sortie du deuxième convoyeur (16) située à proximité de l'entrée du premier convoyeur (14).

12. Façonneuse selon la revendication 11, caractérisée en ce qu'elle comporte en outre un troisième convoyeur (46) à tapis de transfert disposé en aval du trajet aller au voisinage du point intermédiaire (22) et s'étendant en direction d'un intervalle (50) situé entre les premier (14) et deuxième (16) convoyeurs pour assurer un transfert actif des pâtons roulés du trajet aller vers le trajet retour.

13. Façonneuse selon l'une des revendications 11 et 12, dépendantes de la revendication 2, caractérisée en ce que chaque flasque (124) comporte une plaque latérale (134) dans laquelle sont ménagés les passages (128) recevant les broches de fixation (132), la plaque (134) étant montée mobile sur le reste du flasque (124) sous l'action de moyens de commande (138) de l'écartement des premier (14) et deuxième (16) convoyeurs.
